# EUROPEAN PATENT SPECIFICATION

(11) **EP 2 282 957 B1**
(45) Date of publication and mention of the grant of the patent: **15.08.2012**
(21) Application number: 09761854.0
(22) Date of filing: 10.06.2009
(51) Int. Cl.: B65G 65/28

(54) **AN APPARATUS FOR RECLAIMING ROLLING MATERIAL FROM A PILE**
VORRICHTUNG ZUM ABBAU VON RUTSCHENDEM MATERIAL VON EINEM HAUFENLAGER
APPAREIL POUR LA RECUPERATION DE MATÉRIAU PULVERULANT DANS UN TAS

(30) Priority: 11.06.2008 FI 20080402
(43) Date of publication of application: 16.02.2011
(73) Proprietor: Andritz Oy, 00180 Helsinki (FI)
(72) Inventor: KOKKO, Pekka, FI-16710 Hollola (FI); OHVO, Heikki, FI-15860 Hollola (FI)
(74) Representative: HOFFMANN EITLE
(86) International application number: PCT/FI2009/050493
(87) International publication number: WO 2009/150299

(56) References cited:
- EP-A- 1 752 396
- FR-A- 2 234 218
- GB-A- 2 001 594
- NL-A- 6 514 620
- US-A1- 2006 201 784

## Description

The present invention relates to an apparatus for reclaiming rolling material, such as e.g. wood chips, bark, corn or fine-grained material, from a pile.

Reclaiming rolling material, such as wood chip piles, is known to use a reclaimer e.g. presented in FI 98 808 B (FI 945 966 A) which discloses an apparatus according to the preamble of claim 1, wherein a rake and a screw conveyor attached on a reclaimer boom are used in reclaiming chips or other rolling material from a pile. By moving the rake, conveying the material being reclaimed to a conveyor is facilitated, which in turn conveys the material being reclaimed into the center for transportation to the next conveyor.

For example, in the field of woodhandling the volume of storages as well as chipping and discharge capacities (i-m3/h) are strongly increasing. This causes a troublesome problem in the prior art technique, because today the piles of rolling material are made bigger than earlier, width even over 80 meters, whereby the length of the reclaimer boom significantly increases.

The problem in the prior art is, that when the support distance increases, the rigidity of the boom frame must be exponentially increased. This can be obtained by using heavier beams, which in turn results in increasing own weight and further in a need to increase rigidity. Another way to increase rigidity is to increase outer dimensions of the boom frame.

Another problem in prior art solutions is caused by loads tending to circulate the boom, such as the mass of the inclined protruding rake. A known way to eliminate the torque in the frame is to balance the rake etc. with a counterweight. Because the rake is moving continuously back and forth from one end of the boom to the other, the counterweight must be mounted to move together with the rake. Thus, the mass moving on the boom i.e. dynamic load directed to the boom increases, and the bigger the storage and discharge capacity are, the bigger the moving mass increases.

The present invention provides a solution for the above as stated in claim 1. According to the present invention, a novel solution has been developed for supporting the reclaimer boom in an apparatus for reclaiming rolling material, such as e.g. wood chips, bark or corn, from a pile. The apparatus comprises e.g. a reclaimer boom, which is supported on one end on to center column of the reclaimer and on the other end on wheel members, and transportation means attached on the reclaimer boom for transferring the material being reclaimed to a conveyor located below the storing point. The above mentioned problems of the reclaimers used at present are solved according to the present invention by supporting the reclaimer boom in addition to its ends at least by one intermediate support, preferably with a wheel. According to the invention, we have developed a solution for the support wheel frames, with which we can adjust the portion of the vertical loads individually to each wheel. This is done by adjusting the height of the wheel frame and by measuring simultaneously the vertical load to be carried by the wheel. Adjustment is carried out by means of a hydraulic cylinder, whereby the force can be calculated according to measures of the cylinder and pressure of the pump. A wheel construction includes an adjustment rod, blocking of which is released when the adjustment by means of the hydraulic cylinder is started. After releasing the blocking, it is possible to change the height of the wheel support frame steplessly. After the desired load has been reached, the adjusting rod is locked again and the hydraulic cylinder is removed.

In accordance with the invention, the effect of loads twisting the boom is eliminated with the intermediate support of the reclaimer boom. In locating the intermediate support in relation to cross section of the frame optimally so, that it would solve the torque problem, the problem is space utilization below the boom. A conveyor screw requires its own space and the support wheels must be mounted on the backside of the screw. We have solved the torque problem by supporting the reclaimer boom with intermediate supports, preferably with wheels, by choosing the location of the support wheels in relation to the cross section of the boom and by attaching a solid counterweight into frame at the supporting wheels in the longitudinal direction of the frame. The boom may have one or more intermediate supports. A container with electrical equipment connected to the reclaimer and if needed other additional mass, such as steel or concrete weights, are used as a counterweight. The intermediate support is preferably fastened to reclaimer boom or to transportation means essentially to the middle point of the reclaimer boom, or there can be several intermediate supports and they can be located with suitable spacing to the reclaimer boom.

The intermediate support of the reclaimer boom is preferably at least one wheel, preferably a pair of wheels. According to a preferred embodiment of the invention, a support of the reclaimer boom, preferably a wheel or a pair of wheels, is a drive wheel. Using such a drive wheel or a pair of drive wheels in supporting the boom, reduces the lateral load coming to the center column of the reclaimer. In accordance with the invention, a plow being arranged on the reclaimer boom in front of an intermediate support or a pair of intermediate supports assists using at least one intermediate support in supporting the boom, which plow moves a mat of remained rolling material, such as wood chips, to the storing point out of the way of the support or supports. This ensures the disturbance-free/free movement of the support, and thus e.g. bends of the reclaimer boom are avoided, which could occur when the support would for even a moment get stuck during a free movement of the wheel mounted on the other end of the boom or when a single support climbs on a chip mat.

Further, according to the invention the support used in supporting the boom, preferably a wheel or a pair of wheels, is adjustable in the vertical direction. By means of the vertical adjustment, a precisely desired load to a wheel or to a pair of wheels can be obtained. In addition, by means of the adjustment also the manufacturing defects of the reclaimer boom lattice structure can be taken into account, which always necessarily exist in such big structures. Further, a wheel or a pair of wheels can be also turnable in the direction of the tangent of the pile, whereby a wheel or a pair of wheels can be placed exactly in the direction of the circumference of the pile. An advantage of this is that the axial force generated in the wheel remains insignificant during the wheels are travelling on a circular orbit.

Additionally, a wheel or a pair of wheels used as a support can be sprung, whereby it can even better receive exactly the load needed for each case from the boom. The load of the boom varies continuously during the function of the reclaimer. A rake, mounted on a trolley moving on its rails on the boom, moves back and forth over the whole length of the boom all the time. This kind of a rake weighs approximately as much as a locomotive. When the load of the rake moves on the boom, the load being transferred from the boom to the wheels changes according to the location of the rake. By means of the springing of the intermediate support, variations of the load can be deadened and the rigidity of the boom frame can be utilized more efficiently.

Additional advantages of the invention include the following:
- the boom can be designed to have a significantly lighter construction and with smaller cross sectional dimensions,
- the torsional rigidity of the boom can be reduced,
- the vertical forces focusing on an orbit or orbits via the wheels are distributed on a larger area and
- the changing of the wheel can be performed simply by lightening the load of said wheel off, whereby the whole boom does not need to be jacked up.

In the following, the invention is disclosed in more detail with reference to the appended figures, of which
- Fig. 1: illustrates a reclaimer according to the invention,
- Fig. 2: illustrates a reclaimer according to a preferred embodiment of the invention, and
- Fig.3: illustrates a detail of an intermediate support of a reclaimer according to the invention.

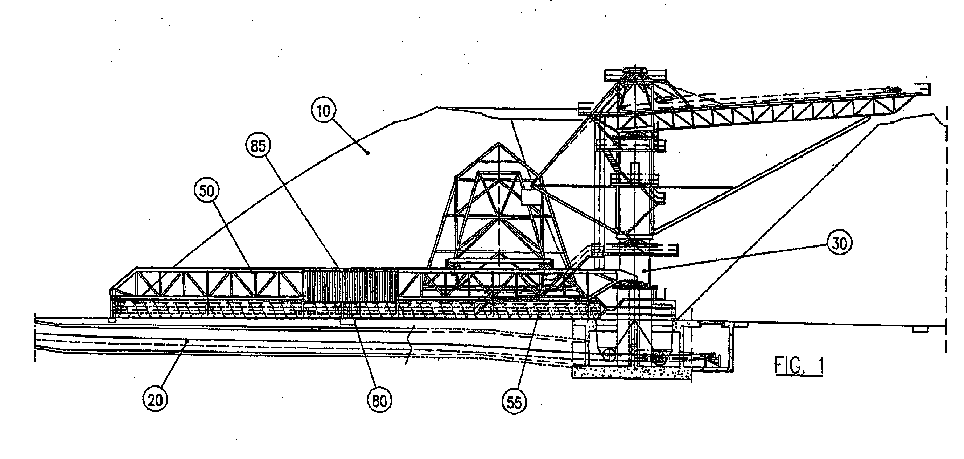

Figure 1 illustrates a solution according to a preferred embodiment of the invention, with an apparatus for reclaiming rolling material, such as e.g. wood chips, bark or corn, from a pile 10 to a conveyor 20 below the storing point. The reclaimer comprises a reclaimer boom 50, which is supported on its one end on the center column 30 and on its other end on wheel members. Transporting means 55 are connected on the reclaimer boom 50 for transferring the material being reclaimed to the conveyor 20 below the storing point. The reclaimer boom 50 and/or the transporting means 55 are supported in addition to their ends at least by one intermediate support 80. In accordance with an embodiment of the invention illustrated in the figure, the intermediate support 80 is arranged essentially to the middle point of the reclaimer boom 50, but the intermediate support 80 or intermediate supports 80 can be located with also otherwise preferable spacing on the boom 50.

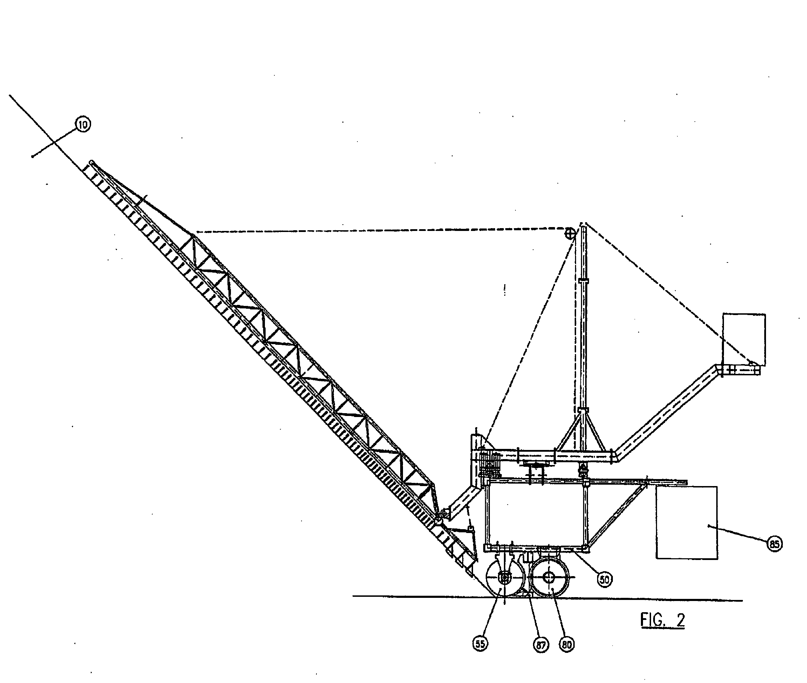

According to a preferred embodiment of the invention, a container with electrical equipment 85 (Figure 2) is arranged for a counterweight on the reclaimer boom 50 at the intermediate support 80. Using a container with electrical equipment to balance the forces tending to twist the boom assists also in power supply to moving parts of the reclaimer when the container with electrical equipment is moving along the boom. Thus, the need for electric cables coming from the ground to the moving parts can be minimized. If needed, also or only additional weights, such as steel or concrete weights, can be arranged at the intermediate support 80. Further, figure 2 illustrates a plow 87 arranged on the reclaimer boom 50 in front of an intermediate support 80 according to the invention, which assists using of the intermediate support 80 in accordance with the invention.

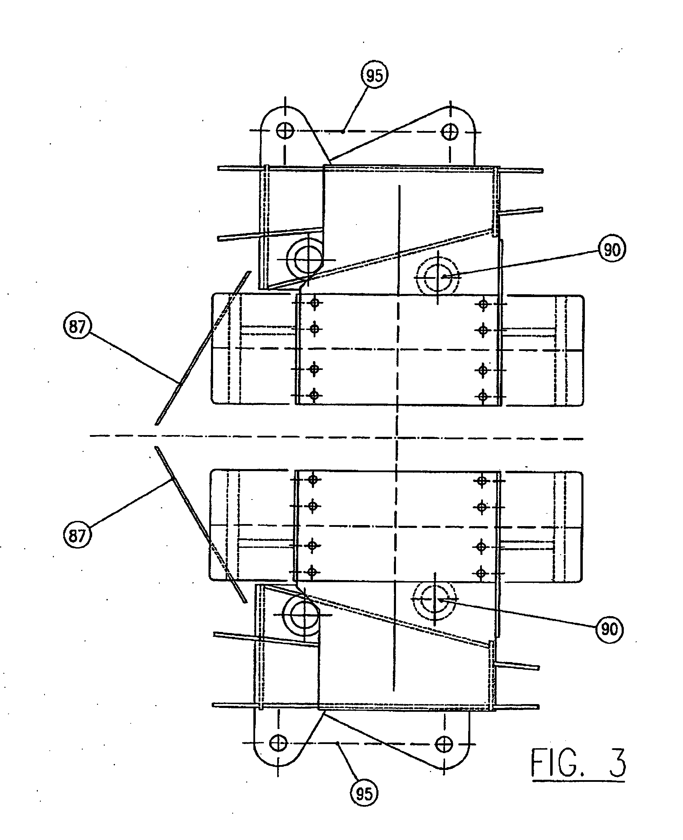

Figure 3 illustrates a pair of support wheels in accordance with the invention in more detail from above. Wheels can be adjusted by means of a hydraulic cylinder i.e. a jack 90 in the vertical direction and in addition, they can be turned by means of an adjustment rod 95 sideward to the direction of the tangent.

Although the above description relates to an embodiment of the invention that is in the light of present knowledge considered the most preferable, it is obvious to a person skilled in the art that the invention can be modified in many different ways within the broadest possible scope defined by the appended claims alone.

## Claims

1. An apparatus for reclaiming rolling material, such as e.g. wood chips, bark or corn from a pile (10) to a conveyor (20) below the storing point, which apparatus comprises a reclaimer boom (50) that is supported to a center column (30) of the reclaimer, to which reclaimer boom (50) transporting means (55) are connected for transferring material being reclaimed to a conveyor (20) below the storing point,
**characterized in that**
the reclaimer boom (50) and/or transporting means (55) are supported in addition to their ends at least by one intermediate support (80) and **in that** the intermediate support (80) is provided with a driving, **and**
**the intermediate support (80)** is **adjustable in the vertical direction,** to adjust the portion of the vertical load borne by said intermediate support.

2. An apparatus according to claim 1, **wherein** the intermediate support (80) is essentially on the middle point of the reclaimer boom (50).

3. An apparatus according to claim 1 or 2, **wherein** the intermediate support (80) is at least one wheel.

4. An apparatus according to claim 3, **wherein** the intermediate support (80) is a pair of wheels.

5. An apparatus according to any of the preceding claims, **wherein** a hydraulic cylinder is arranged in the intermediate support (80) for the vertical adjustment of the intermediate support (80).

6. An apparatus according to any one of the preceding claims, **wherein** the intermediate support (80) is turnable to the direction of a tangent of the pile (10).

7. An apparatus according to claim 6, wherein the intermediate support (80) is provided with an adjustment rod (95) for tangential adjustment of the intermediate support (80).

8. An apparatus according to any of the preceding claims, wherein a container with electrical equipment (85) and/or additional weights are arranged on the reclaimer boom(50)at the support (80), which balance the forces tending to twist the boom.

9. An apparatus according to any of the preceding claims, wherein a plow (87) is arranged on the reclaimer boom (50) in front of the support (80).

10. An apparatus according to any one of the preceding claims in combination with claim 3, wherein the support of the wheel is sprung.

## Patentansprüche

1. Vorrichtung zum Abbau von rutschendem Material wie beispielsweise Hackschnitzeln, Rinde oder Getreide von einem Haufenlager (10) auf einen unterhalb des Lagerplatzes gelegenen Förderer (20), mit einem auf einer Mittelsäule (30) des Abbauförderers abgestützten Ausleger (50), wobei an diesen Ausleger (50) für die Übergabe des abgebauten Materials auf einen unterhalb des Lagerplatzes gelegenen Förderer (20) eine Transportvorrichtung (55) angeschlossen ist,
**dadurch gekennzeichnet, dass**
der Ausleger (50) des Abbauförderers und/oder die Transportvorrichtung (55) außer an ihren Enden zumindest noch auf einer Zwischenstütze (80) abgestützt sind und dadurch, dass die Zwischenstütze (80) mit einem Antrieb versehen ist, und dass
**die Zwischenstütze (80)** in senkrechter Richtung so verstellbar ist, dass der Anteil der von dieser Zwischenstütze aufgenommenen vertikalen Last einstellbar ist.

2. Vorrichtung nach Anspruch 1, **wobei** die Zwischenstütze (80) im Wesentlichen im Mittelpunkt des Auslegers (50) des Abbauförderers liegt.

3. Vorrichtung nach Anspruch 1 oder 2, **wobei** die Zwischenstütze (80) zumindest aus einem Rad besteht.

4. Vorrichtung nach Anspruch 3, wobei die Zwischenstütze (80) aus einem Räderpaar besteht.

5. Vorrichtung nach einem der vorgenannten Ansprüche, **wobei** in der Zwischenstütze (80) ein Hydraulikzylinder für die vertikale Verstellung der Zwischenstütze (80) eingebaut ist.

6. Vorrichtung nach einem der vorgenannten Ansprüche, **wobei** die Zwischenstütze (80) in die Richtung einer Tangente des Haufenlagers (10) drehbar angeordnet ist.

7. Vorrichtung nach Anspruch 6, **wobei** die Zwischenstütze (80) mit einer Verstellstange (95) zur tangentialen Verstellung der Zwischenstütze (80) vorgesehen ist.

8. Vorrichtung nach einem der vorgenannten Ansprüche, **wobei** auf dem Ausleger (50) des Abbauförderers an der Stütze (80) ein Behälter mit Elektroausrüstung (85) und/oder zusätzliche Gewichte angeordnet sind, wodurch die auf den Ausleger wirkenden Verdrehungskräfte ausgeglichen werden.

9. Vorrichtung nach einem der vorgenannten Ansprüche, **wobei** auf dem Ausleger (50) des Abbauförderers (50) vor der Stütze (80) ein Pflug (87) angeordnet ist.

10. Vorrichtung nach einem der vorgenannten Ansprüche, in Kombination mit Anspruch 3, **wobei** die Radstütze abgefedert ist.

## Revendications

1. Appareil pour la reprise de matière en vrac, telle que, par exemple, des copeaux de bois, des écorces ou du grain à partir d'un tas (10) vers un convoyeur (20) au-dessous du point de stockage, lequel appareil comprend un bras de reprise (50) qui est supporté sur une colonne centrale (30) du dispositif de reprise, bras de reprise (50) auquel un moyen de transport (55) est relié pour transférer la matière étant reprise vers un convoyeur (20) au-dessous du point de stockage,
**caractérisé en ce que**
le bras de reprise (50) et/ou le moyen de transport (55) sont supportés, en plus de leurs extrémités, au moins par un support intermédiaire (80) et **en ce que** le support intermédiaire (80) est muni d'un entraînement, et
le support intermédiaire (80) peut être ajusté dans la direction verticale; pour ajuster la partie de la charge verticale portée par ledit support intermédiaire.

2. Appareil selon la revendication 1, dans lequel le support intermédiaire (80) est sensiblement sur le point médian du bras de reprise (50).

3. Appareil selon la revendication 1 ou 2, dans lequel le support intermédiaire (80) est au moins une roue.

4. Appareil selon la revendication 3, dans lequel le support intermédiaire (80) est une paire de roues.

5. Appareil selon l'une quelconque des revendications précédentes, dans lequel un vérin hydraulique est agencé dans le support intermédiaire (80) pour l'ajustage vertical du support intermédiaire (80).

6. Appareil selon l'une quelconque des revendications précédentes, dans lequel le support intermédiaire (80) peut être tourné dans la direction d'une tangente au tas (10).

7. Appareil selon la revendication 6, dans lequel le support intermédiaire (80) est muni d'une tige d'ajustage(95) pour l'ajustement tangentiel du support intermédiaire (80).

8. Appareil selon l'une quelconque des revendications précédentes, dans lequel un conteneur muni d'un équipement électrique (85) et/ou des poids supplémentaires sont agencés sur le bras de reprise (50) au niveau du support (80), lesquels équilibrent les forces ayant tendance à tordre le bras.

9. Appareil selon l'une quelconque des revendications précédentes, dans lequel un déflecteur (87) est agencé sur le bras de reprise (50) devant le support (80).

10. Appareil selon l'une quelconque des revendications précédentes en combinaison avec la revendication 3, dans lequel le support de la roue est à ressorts.
